# EUROPEAN PATENT SPECIFICATION

(11) **EP 0 914 413 B1**
(45) Date of publication and mention of the grant of the patent: **04.05.2005**
(21) Application number: 97927342.2
(22) Date of filing: 22.05.1997
(51) Int. Cl.: C12C 11/00, C12H 1/06, C12G 3/08

(54) **A BREWING PROCESS**
EIN BRAUVERFAHREN
PROCEDE DE BRASSAGE

(30) Priority: 23.05.1996 IE 960360
(43) Date of publication of application: 12.05.1999
(73) Proprietor: Valdosa Limited, Cork (IE)
(72) Inventor: JOHNS, Colin, Cork (IE)
(74) Representative: Schütte, Gearoid
(86) International application number: PCT/IE1997/000039
(87) International publication number: WO 1997/044436

(56) References cited:
- BE-A- 1 001 787
- GB-A- 489 024
- GB-A- 2 190 603
- GB-A- 2 270 525
- US-A- 4 396 505
- CARPENTER, P.M.: "Analysis and quality control of beers and lagers during and after processing." ANALYTICAL PROCEEDINGS, vol. 17, no. 5, 1980, UK, pages 195-196, XP002044090

## Description

The invention relates to a stout brewing process.

In the prior art BE-A-1001787 discloses a stout brewing process. It is particularly concerned with the problem of monitoring and controlling carbon dioxide and nitrogen levels in the stout.

There are considerable technical difficulties in producing high quality stout having desired properties. A complex series of variables are involved in the production process and it is difficult to reproduce the production process from one production site to another.

One particular area of difficulty is in removing unwanted particulates from the stout. It is known to use centrifuges for this purpose. However, the capacity of such centrifuges is limited and it is often difficult to optimise the operation of the centrifuges.

The invention is therefore directed towards providing an improved process for producing stout which will overcome at least some of these difficulties.

According to the invention, there is provided a stout brewing process comprising the steps of:-
preparing malt by cleaning, weighing, and milling malt;
preparing roasted barley by cleaning, weighing and milling roasted barley;
mixing the prepared malt, the prepared roasted barley and hot water in a mash tun to prepare a brew;
preparing sweet wort by agitating the brew and allowing starch in the brew to convert to sugar by enzymatic activity;
separating spent grains of malt and roasted barley from the sweet wort;
boiling the sweet wort;
adding hops to the boiling sweet wort to prepare hopped wort;
removing hop residues from the hopped wort;
cooling the hopped wort;
adding yeast and sterile air to the hopped wort and allowing the mixture thus formed to ferment to produce stout;
blending and storing the stout;
applying a precoat material to a plate filter;
passing the stout through the precoated plate filter to substantially clarify the stout by removing particulates from the stout and forming bright diluted stout;
controlling the carbon dioxide content of the stout;
controlling the nitrogen content of the stout; and
storing the stout,
characterised in that the process includes monitoring the amount of oxygen in the stout both upstream and downstream of the plate filter,
and the process further includes storing the blended stout in a beer storage vessel,
delivering blended stout from the beer storage vessel to a balance tank, maintaining the stout at a desired pressure within the balance tank,
collecting filtered stout discharged from the filter in a buffer vessel, controlling the level of filtered stout in the buffer vessel to maintain a substantially constant pressure drop across the plate filter,
said stout level being controlled by sensing the level of stout in the buffer vessel by means of a level detector mounted on the buffer vessel, said level detector being operatively connected to a control valve downstream of the buffer vessel in a stout delivery line between the buffer vessel and a filtered stout storage vessel for controlling the flow of filtered stout from the buffer vessel to the filtered stout storage vessel, reducing the rate of flow of filtered stout from the buffer vessel if the stout in the buffer vessel drops below a preset level sensed by said level detector.

In a particularly preferred embodiment of the invention, the process includes the step of adding bodyfeed material to the stout in-line upstream of the precoated plate filter.

In one embodiment of the invention the process includes the steps of:
monitoring the alcohol content of the filtered bright stout by means of an alcohol analyser which is connected to the stout delivery line between the buffer vessel and the filtered stout storage vessel,
monitoring the rate of flow of filtered bright stout from the buffer vessel by a flow meter which is connected to the stout delivery line,
a dilution water flow line being connected to the stout delivery line between the buffer vessel and the filtered stout storage vessel, a water control valve being mounted in said dilution water flow line,
injecting dilution water into the filtered bright stout from said dilution water flow line as required to achieve a desired alcohol content,
said water control valve being operatively connected to the alcohol analyser and to the flow meter for controlling the water injection in response to the sensed alcohol content and the flow rate of the filtered bright stout.

In another embodiment the process includes the step of maintaining a pressure of about 0.7 bar within the balance tank and maintaining a pressure of about 0.5 bar within the buffer vessel.

The invention will be more clearly understood from the following description thereof, given by way of example only, with reference to the accompanying drawings, in which:-
Fig. 1 is a schematic block diagram of the process of the invention; and
Fig. 2 is a schematic flow diagram illustrating filtration and associated steps in the process of the invention.

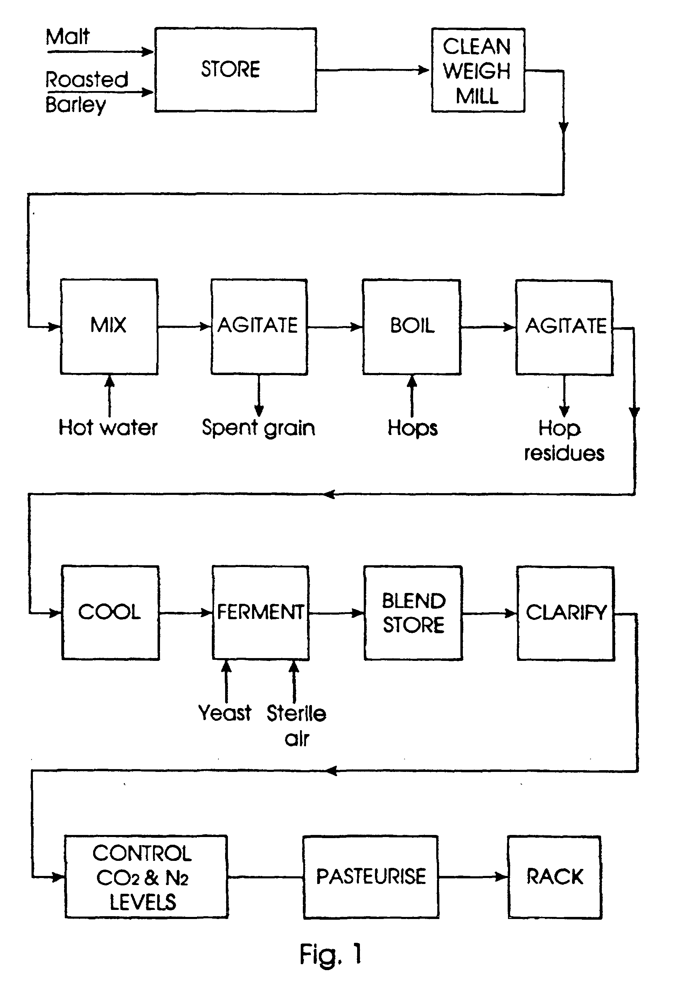

Referring to the drawings, and initially to Fig. 1, there is illustrated a brewing process for stout according to the invention. In the brewing process, malt and roasted barley are separately stored in silos and are then cleaned and subsequently weighed prior to milling. The malt and roasted barley are then mixed with hot water in a mash tun. The brew is transferred to a lauter tun to separate the sweet wort. Spent grains of malt and roasted barley are then removed. The sweet wort is then pumped to a wort copper where it is boiled and hops are added. The hopped wort is then pumped to a whirlpool where hop residues are drained away. At this stage, the sweet wort is still hot and it is then pumped to a heat exchanger where it is cooled. The cooled sweet wort is then pumped to a fermentation vessel where yeast and sterile air are added and it is allowed to ferment to form stout. The stout is then blended and stored in a storage tank to allow it to mature.

In the process of the invention, the stout is clarified as will be described in more detail below. The carbon dioxide and nitrogen levels in the stout are controlled and the stout is then stored, ready for delivery into barrels, as required.

In the process of the invention, Murphy's Irish Stout Yeast having the following characteristics is added to the cooled sweet wort in the fermentation vessel.

| | |
|---|---|
| Microbiological plate characteristics | - No growth on Wort Agar @ 37°C, SDA+, Lys and Cu. |
| | - No Melibiase activity. |
| | - No killer yeast activity. |
| | - No Phenolic flavour production. |
| Fermentation characteristics | - Has some characteristics of both top and bottom fermenting yeasts. |
| | - After two days fermentation it floats on the liquid surface and at the end of the fermentation it settles rapidly. |
| | - Highly hydrophobic and flocculent ( ABS/min 0.8 - 1.0). |
| Dextrin degradation | - No activity. |
| Aroma profile | - Low SO₂ production. |
| | - Slightly low ester production. |
| | - Slightly high production of higher alcohols. |
| | - No 4 - VG or styrene production. |
| Giant colony morphology | - 95% dark green malt colony type with pseudohyphale. |
| | - 5% small white edged/green centre colony type. |

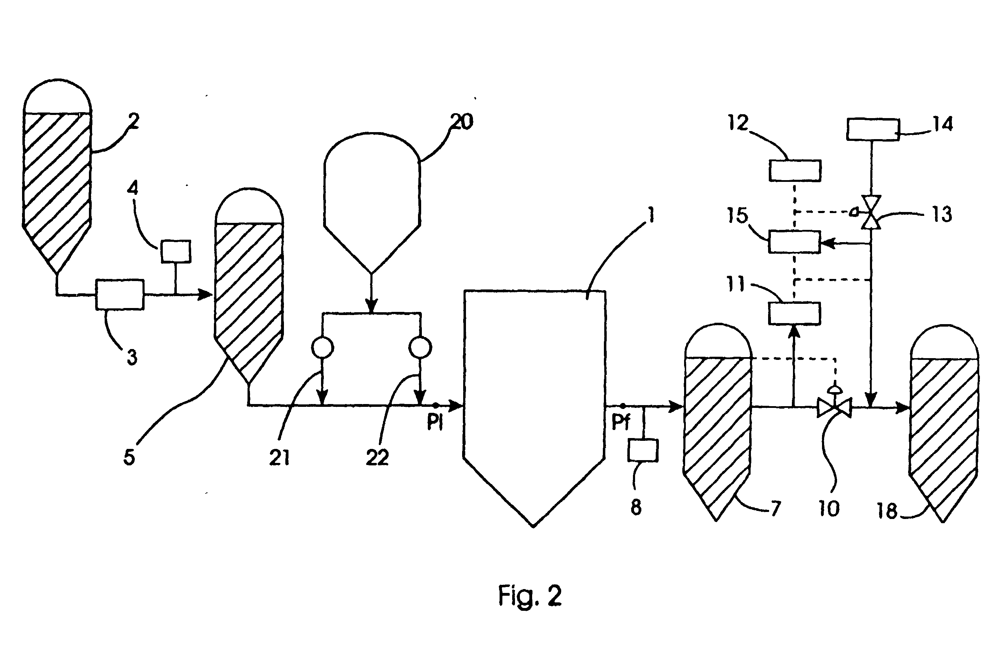

Referring to Fig. 2, in the process of the invention a plate filter 1 is used to substantially clarify the stout by removing particulates from the stout and forming bright diluted stout.

Stout to be clarified is stored in a storage beer vessel 2. The flow of beer from the vessel 2 is monitored by a flowmeter 3 and the oxygen content of the beer is monitored by an oxygen analyser 4. The beer is delivered into a balance tank 5 which is held at a pressure of approximately 0.7 bar. The level of unfiltered stout in the balance tank 5 is controlled to maintain a substantially constant pressure drop across the filter 1. Bright diluted beer from the plate filter 1 is collected in a buffer vessel 7, held at approximately 0.5 bar pressure. The oxygen content of the bright beer delivered into the buffer vessel 7 is monitored by a second oxygen analyser 8. The level of bright stout in the buffer tank is controlled to maintain a substantially constant pressure drop across the plate filter 1 and hence optimise the operation of the filter 1. The level of bright stout in the buffer tank is controlled by reducing the rate of flow of bright stout from the buffer vessel 7 if the level of bright stout drops below a preset level. A control valve 10 with a feedback control loop to a level detector is used to control the flow of bright stout from the buffer vessel 7.

The rate of flow of bright stout from the buffer vessel 7 is monitored by a flowmeter 11. The alcohol content of the stout is also monitored by an alcohol analyser 12. If the amount of alcohol present in the bright stout is above a predetermined value, a control valve 13 on a dilution water flow line 14 is activated. The flow of dilution water is monitored by a further flow meter 15.

In this way, the amount of dilution water added is closely controlled to achieve the desired alcohol content in the bright stout. The bright stout having, if necessary, been diluted with water to achieve a uniform desired alcohol content is delivered into a storage vessel 18 for further processing.

The filter plates of the plate filter 1 are first coated by applying a precoat material to the filter plates from a make-up vessel 20 through a precoat delivery line 21. Bodyfeed material is added to the stout in-line upstream of the precoated plate filter 1 through a body feed delivery line 22.

### EXAMPLE

The stout was filtered using a ZHF/Z kieselguhr horizontal plate filter available from Schenk Fiterbaum GmbH of Germany. The filter had the following features:-
- filter elements:: approx. 46m²
- spacing between elements:: 35 mm
- sludge volume:: 1,500 litres
- precoat material:: approx 45.4 Kg of Celite 5C available from Celite Corporation
- Bodyfeed added to stout: approx. 45.4 Kg of Celite Standard SUPERCEL mixed with approx. 22.7 Kg of Celite 577, both available from Celite Corporation.
- Dilution Target:: 9.4°P

| **Time (Mins)** | **Prefilter Pressure** **(Bar)** | **Post Filter Pressure** **(Bar)** | **Flow Rate through filter** **hl/hr** | **Oxygen Content of Dilution Water** **(ppb)** | **Alcohol Level** **(% vol)** | **Total Filtered (hectalitres)** |
|---|---|---|---|---|---|---|
| 0 | 3.0 | 0.9 | 430.6 | 21 | 4.0 | - |
| 3 | 2.9 | 0.7 | 438.2 | 22 | 4.1 | 88.0 |
| 12 | 3.2 | 0.9 | 360.0 | 23 | 4.0 | 173.4 |
| 21 | 3.1 | 0.7 | 362.1 | 23 | 4.1 | - |
| 26 | 3.2 | 0.8 | 358.5 | 25 | 4.0 | 240.5 |
| 29 | Chase Water | | | | | |

| | |
|---|---|
| Recirculation Time | 34 minutes |
| Total Filtration Time | 29 minutes |
| Run Out Time | 45 minutes |
| Final Water Volume | 57.3 HL's |
| Final Stout Volume | 276.3 HL's |
| Total Volume to Bright Stout Tank | 333.6 HL's |

The bright stout thus produced had excellent properties of uniform alcohol content, colour, pH, dissolved CO₂, visual clarity, yeast content, taste and aroma.

## Claims

1. A stout brewing process comprising the steps of:-
preparing malt by cleaning, weighing, and milling malt;
preparing roasted barley by cleaning, weighing and milling roasted barley;
mixing the prepared malt, the prepared roasted barley and hot water in a mash tun to prepare a brew;
preparing sweet wort by agitating the brew and allowing starch in the brew to convert to sugar by enzymatic activity;
separating spent grains of malt and roasted barley from the sweet wort;
boiling the sweet wort;
adding hops to the boiling sweet wort to prepare hopped wort;
removing hop residues from the hopped wort;
cooling the hopped wort;
adding yeast and sterile air to the hopped wort and allowing the mixture thus formed to ferment to produce stout;
blending and storing the stout;
applying a precoat material to a plate filter;
passing the stout through the precoated plate filter to substantially clarify the stout by removing particulates from the stout and forming bright diluted stout;
controlling the carbon dioxide content of the stout;
controlling the nitrogen content of the stout; and
storing the stout,
**characterised in that** the process includes monitoring (4,8) the amount of oxygen in the stout both upstream and downstream of the plate filter (1),
and the process further includes storing the blended stout in a beer storage vessel (2),
delivering blended stout from the beer storage vessel (2) to a balance tank (5), maintaining the stout at a desired pressure within the balance tank (5),
collecting filtered stout discharged from the filter (1) in a buffer vessel (7), controlling the level of filtered stout in the buffer vessel (7) to maintain a substantially constant pressure drop across the plate filter (1),
said stout level being controlled by sensing the level of stout in the buffer vessel (7) by means of a level detector mounted on the buffer vessel (7), said level detector being operatively connected to a control valve (10) downstream of the buffer vessel (7) in a stout delivery line between the buffer vessel (7) and a filtered stout storage vessel (18) for controlling the flow of filtered stout from the buffer vessel (7) to the filtered stout storage vessel (18), reducing the rate of flow of filtered stout from the buffer vessel (7) if the stout in the buffer vessel (7) drops below a preset level sensed by said level detector.

2. A process as claimed in claim 1 including the step of adding bodyfeed material to the stout in-line upstream of the precoated plate filter (1).

3. A process as claimed in claim 1 or claim 2 including the steps of:
monitoring the alcohol content of the filtered bright stout by means of an alcohol analyser (12) which is connected to the stout delivery line between the buffer vessel (7) and the filtered stout storage vessel (18),
monitoring the rate of flow of filtered bright stout from the buffer vessel (7) by a flow meter (11) which is connected to the stout delivery line,
a dilution water flow line (14) being connected to the stout delivery line between the buffer vessel (7) and the filtered stout storage vessel (18), a water control valve (13) being mounted in said dilution water flow line (14),
injecting dilution water into the filtered bright stout from said dilution water flow line (14) as required to achieve a desired alcohol content,
said water control valve (13) being operatively connected to the alcohol analyser (12) and to the flow meter (11) for controlling the water injection in response to the sensed alcohol content and the flow rate of the filtered bright stout.

4. A process as claimed in any preceding claim; including the step of maintaining a pressure of about 0.7 bar within the balance tank (5) and maintaining a pressure of about 0.5 bar within the buffer vessel (7).

## Patentansprüche

1. Brauverfahren für Stout-Bier, das Folgende Schritte umfasst:
Vorbereitung von Malz, indem Malz gereinigt, gewogen und gemahlen wird;
Vorbereitung von gerösteter Gerste, indem geröstete Gerste gereinigt, gewogen und gemahlen wird;
Mischen des vorbereiteten Malzes, der vorbereiteten gerösteten Gerste und heißen Wassers in einem Maischefass um ein Bräu herzustellen;
Vorbereitung von verzuckerter Maische, indem das Bräu umgerührt wird und indem Stärke in dem Bräu durch enzymatische Aktivität in Zucker umgewandelt wird;
Trennen der Biertreber des Malzes und der gerösteten Gerste von der verzuckerten Maische;
Kochen der verzuckerten Maische;
Hinzufügen von Hopfen zur kochenden verzuckerten Maische, um gehopfte Maische herzustellen;
Entfernen von Hopfenrückständen aus der gehopften Maische;
Abkühlen der gehopften Maische;
Hinzufügen von Hefe und steriler Luft zur gehopften Maische und Fermentieren der somit gebildeten Mischung, um Stout-Bier zu erzeugen;
Verschneiden und Lagern des Stout-Biers;
Auftragen eines Vorbeschichtungsmaterials auf ein Plattenfilter;
Hindurchleiten des Stout-Biers durch das vorbeschichtete Plattenfilter, um das Stout-Bier durch Entfemen von Partikeln aus dem Stout-Bier und Bilden eines hellen wässrigen Stout-Biers im Wesentlichen zu klären;
Regeln des Kohlendioxidgehalts des Stout-Biers;
Regeln des Stickstoffgehalts des Stout-Biers; und
Lagern des Stout-Biers,
**dadurch gekennzeichnet, dass** das Verfahren die Überwachung (4, 8) der Sauerstoffmenge in dem Stout-Bier sowohl vor als auch hinter dem Plattenfilter (1) umfasst,
und das Verfahren des Weiteren das Lagern des verschnittenen Stout-Biers in einem Bierlagerungsbehälter (2) umfasst,
Zuführen des verschnittenen Stout-Biers aus dem Bierlagerungsbehälter (2) in einen Ausgleichsbehälter (5), wobei das Stout-Bier auf einem gewünschten Druck in dem Ausgleichsbehälter (5) gehalten wird,
Sammeln des gefilterten Stout-Biers, das aus dem Filter (1) ausgegeben wird, in einem Pufferbehälter (7), Regeln des Pegels des gefilterten Stout-Biers in dem Pufferbehälter (7), um einen im Wesentlichen konstanten Druckabfall in dem Plattenfilter (1) beizubehalten,
wobei der Pegel des Stout-Biers geregelt wird, indem der Pegel des Stout-Biers in dem Pufferbehälter (7) mit Hilfe eines Pegeldetektors erfasst wird, der am Pufferbehälter (7) angebracht ist, der Pegeldetektor betriebsfähig mit einem Steuerventil (10) hinter dem Pufferbehälter (7) in einer Stout-Bierzufuhrleitung zwischen dem Pufferbehälter (7) und einem Lagerbehälter (18) für gefiltertes Stout-Bier verbunden ist, um die Strömung des gefilterten Stout-Biers aus dem Pufferbehälter (7) in den Lagerbehälter (18) für gefiltertes Stout-Bier zu regeln, und die Strömungsmenge des gefilterten Stout-Biers aus dem Pufferbehälter (7) verringert wird, wenn das Stout-Bier in dem Pufferbehälter (7) unter einen Sollpegel, der von dem Pegeldetektor erfasst wird, abfällt.

2. Verfahren nach Anspruch 1, das den Schritt des Hinzufügens von Körperzuführungsmaterial zum Stout-Bier leitungsintegriert vor dem vorbeschichteten Plattenfilter (1) umfasst.

3. Verfahren nach Anspruch 1 oder 2, das Folgende Schritte umfasst:
Überwachen des Alkoholgehalts des gefilterten hellen Stout-Biers mit Hilfe eines Alkoholanalysegeräts (12), das an die Stout-Bierzufuhrleitung zwischen dem Pufferbehälter (7) und dem Lagerbehälter (18) für gefiltertes Stout-Bier angeschlossen ist,
Überwachen der Strömungsmenge des gefilterten hellen Stout-Biers aus dem Pufferbehälter (7) mit Hilfe eines Strömungsmessers (11), der an die Stout-Bierzufuhrleitung angeschlossen ist,
Anschließen einer Verdünnungswasserströmungsleitung (14) an die Stout-Bierzufuhrleitung zwischen dem Pufferbehälter (7) und dem Lagerbehälter (18) für gefiltertes Stout-Bier, Anbringen eines Wasserregelventils (13) in der Verdünnungswasserströmungsleitung (14),
Einspritzen von Verdünnungswasser in das gefilterte helle Stout-Bier aus der Verdünnungswasserströmungsleitung (14) nach Bedarf, um einen gewünschten Alkoholgehalt zu erreichen, wobei das Wasserregelventil (13) betriebsfähig mit dem Alkoholanalysegerät (12) und dem Strömungsmesser (11) verbunden ist, um die Wassereinspritzung als Reaktion auf den erfassten Alkoholgehalt und die Strömungsmenge des gefilterten hellen Stout-Biers zu regeln.

4. Verfahren nach einem der vorhergehenden Ansprüche, das den Schritt der Aufrechterhaltung eines Drucks von etwa 0,7 Bar in dem Ausgleichsbehälter (5) und die Aufrechterhaltung eines Drucks von etwa 0,5 Bar in dem Pufferbehälter (7) umfasst.

## Revendications

1. Un procédé de brassage de stout comportant les étapes de :
préparation du malt par nettoyage, pesage et mouture du malt ;
préparation de l'orge torréfiée par nettoyage, pesage et mouture de l'orge torréfiée ;
mélange du malt préparé, de l'orge torréfiée préparée et d'eau chaude dans une cuve-matière pour préparer un brassin ;
préparation du moût sucré en agitant le brassin et en permettant à l'amidon présent dans le brassin de se convertir en sucre par activité enzymatique ;
séparation des drêches de malt et d'orge torréfiée du moût sucré ;
ébullition du moût sucré ;
ajout de houblon au moût sucré en ébullition pour préparer le moût houblonné ;
élimination des résidus de houblon du moût houblonné ;
refroidissement du moût houblonné ;
ajout de levure et d'air stérile au moût houblonné et attente que le mélange ainsi formé fermente pour produire le stout.
coupage et garde du stout ;
application d'un matériau de précouche à un filtre à plaques ;
passage du stout à travers le filtre à plaques recouvert de précouche afin de clarifier considérablement le stout en éliminant les matières particulaires du stout et former un stout brillant dilué ;
régulation de la teneur du stout en dioxyde de carbone ;
régulation de la teneur du stout en azote ; et
garde du stout,
**caractérisé par le fait que** le procédé comporte la surveillance (4, 8) de la quantité d'oxygène dans le stout, en amont comme en aval du filtre à plaques (1),
et le procédé comprend en outre la garde du stout coupé dans une cuve de garde de bière (2) ;
le refoulement du stout coupé depuis la cuve de garde de bière (2) jusqu'à un réservoir d'équilibre (5), le maintien du stout à une pression désirée à l'intérieur du réservoir d'équilibre (5),
la collecte du stout filtré sortant du filtre (1) dans une cuve tampon (7), la régulation du niveau de stout filtré dans la cuve tampon (7) pour maintenir une chute de pression sensiblement constante sur le filtre à plaques (1),
ledit niveau de stout étant régulé par la détection du niveau de stout dans la cuve tampon (7) par le moyen d'un détecteur de niveau monté sur la cuve tampon (7), ledit détecteur de niveau étant connecté fonctionnellement à une vanne de commande (10) en aval de la cuve tampon (7) dans une conduite de refoulement de stout entre la cuve tampon (7) et une cuve de garde du stout filtré (18) pour réguler l'écoulement du stout filtré venant de la cuve tampon (7) et allant à la cuve de garde du stout filtré (18), en réduisant le débit du stout filtré venant de la cuve tampon (7) si le stout dans la cuve tampon (7) descend au-dessous d'un niveau donné détecté par ledit détecteur de niveau.

2. Un processus selon la revendication 1 comportant l'étape d'ajout d'une matière d'alluvionnage au stout dans la conduite en amont du filtre à plaques recouvert de précouche.

3. Un processus selon la revendication 1 ou la revendication 2 comportant les étapes de :
surveillance de la teneur en alcool du stout brillant filtré par le moyen d'un analyseur d'alcool (12) qui est connecté à la conduite de refoulement du stout entre la cuve tampon (7) et la cuve de garde du stout filtré (18),
surveillance du débit de stout brillant filtré venant de la cuve tampon (7) par un débitmètre (11) qui est connecté à la conduite de refoulement du stout,
une conduite d'eau de dilution (14) étant connectée à la conduite de refoulement du stout entre la cuve tampon (7) et la cuve de garde du stout filtré (18), une vanne de commande d'eau (13) étant montée dans ladite conduite d'eau de dilution (14),
l'injection d'eau de dilution dans le stout brillant filtré depuis ladite conduite d'eau de dilution (14) selon ce qui est requis pour obtenir la teneur en alcool désirée,
ladite vanne de commande d'eau (13) étant connectée fonctionnellement à l'analyseur d'alcool (12) et au débitmètre (11) afin de réguler l'injection d'eau en réponse à la teneur en alcool détectée et au débit du stout brillant filtré.

4. Un processus selon une quelconque des revendications précédentes ; comportant l'étape de maintenir une pression d'environ 0,7 bar à l'intérieur du réservoir d'équilibre (5) et de maintenir une pression d'environ 0,5 bar à l'intérieur de la cuve tampon (7).
